# EUROPEAN PATENT APPLICATION

(11) **EP 2 573 911 A2**
(43) Date of publication of application: **27.03.2013**
(21) Application number: 12185298.2
(22) Date of filing: 20.09.2012
(51) Int. Cl.: H02K 5/20

(54) **Electric machine module cooling system and method**

(30) Priority: 23.09.2011 US 201113243525
(71) Applicant: Remy Technologies, LLC, Pendleton, IN 46064 (US)
(72) Inventor: Chamberlin, Bradley D., Pendleton, IN Indiana 46064 (US); Ramey, James J., Fortville, IN Indiana 46040 (US); Creviston, Alex S., Muncie, IN Indiana 47302 (US)
(74) Representative: Roberts, Peter David

(57) **Abstract**

Embodiments of the invention provide an electric machine module. The module can include a housing that can define a machine cavity. The sleeve member (14) can include a first and a second axial end. The sleeve member (14) can further include a first coolant jacket (36) and a first seal element (46) coupled to the sleeve member (14) substantially adjacent to the first axial end to substantially seal at least a portion of the first coolant jacket. The sleeve member (14) can include a second coolant jacket (36) and a second seal element (46) coupled to the sleeve member substantially adjacent to the second axial end to substantially seal at least a portion of the second coolant jacket. The module can include a stator assembly positioned within the machine cavity so that portions of the first and second coolant jackets substantially circumscribe portions of the stator assembly.

## Description

### BACKGROUND

Electric machines, often contained within a machine cavity of a housing, generally include a stator and a rotor. For some electric machines, the stator can be secured to the housing using different coupling techniques to generally secure the electric machine within the housing. During operation of some electric machines, heat energy can by generated by both the stator and the rotor, as well as other components of the electric machine. For some electric machines, the increase in heat energy can, at least partially, impact electric machine operations.

### SUMMARY

Some embodiments of the invention provide an electric machine module. The module can include a housing, which can define a machine cavity. In some embodiments, the housing can comprise a sleeve member coupled to at least one end cap. In some embodiments, the sleeve member can include a first and a second axial end. Moreover, in some embodiments, the sleeve member can include a first coolant jacket at least partially disposed within a portion of the sleeve member. In some embodiments, a first seal element can be coupled to the sleeve member substantially adjacent to the first axial end to substantially seal at least a portion of the first coolant jacket. In some embodiments, the sleeve member can comprise a second coolant jacket at least partially disposed within a portion of the sleeve member. In some embodiments, a second seal element can be coupled to the sleeve member substantially adjacent to the second axial end to substantially seal at least a portion of the second coolant jacket. In some embodiments, an electric machine, including a stator assembly, can be at least partially positioned within the machine cavity. In some embodiments, the electric machine can be positioned so that portions of the first and the second coolant jackets substantially circumscribe portions of the stator assembly.

Some embodiments of the invention provide an electric machine module. The module can include a housing, which can define a machine cavity. In some embodiments, the housing can comprise a sleeve member coupled to at least one end cap. In some embodiments, the sleeve member can include a first and a second axial end. Moreover, in some embodiments, the sleeve member can include a first and a second coolant jacket at least partially disposed within portions of the sleeve member. In some embodiments, the second coolant jacket can be at least partially axially adjacent to the first coolant jacket. In some embodiments, the sleeve member can comprise a central region disposed substantially between portions of the first coolant jacket and the second coolant jacket. In some embodiments, the central region can include first regions and second regions circumferentially arranged through portions of the sleeve member. In some embodiments, an electric machine, including a stator assembly, can be at least partially positioned within the machine cavity. In some embodiments, the electric machine can be positioned so that portions of the first and the second coolant jackets substantially circumscribe portions of the stator assembly.

According to an aspect of the invention there is provided an electric machine module comprising a housing at least partially defining a machine cavity, the housing further including a sleeve member coupled to at least one end cap, the sleeve member comprising a first axial end and a second axial end, a first coolant jacket being disposed substantially within at least a portion of the sleeve member, a first seal element coupled to the sleeve member substantially adjacent to the first axial end to substantially seal at least a portion of the first coolant jacket, a second coolant jacket being disposed substantially within at least a portion of the sleeve member and being at least partially axially adjacent to the first coolant jacket, and a second seal element coupled to the sleeve member substantially adjacent to the second axial end to substantially seal at least a portion of the second coolant jacket; and an electric machine being positioned substantially within the machine cavity and being at least partially enclosed by the housing, the electric machine including a stator assembly, the electric machine positioned within the machine cavity so that at least some portions of the stator assembly are substantially circumscribed by portions of the first coolant jacket and the second coolant jacket.

The electric machine module may further comprise a central region disposed substantially between at least a portion of the first coolant jacket and a portion of the second coolant jacket.

The central region may comprise at least one first region and at least one second region.

The first coolant jacket may be fluidly connected to the second coolant jacket.

The electric machine module may further comprise a coolant inlet disposed through a portion of the sleeve member, and wherein the coolant inlet is in fluid communication with the first coolant jacket and the second coolant jacket.

The electric machine module may further comprise two coolant inlets disposed through portions of the sleeve member, wherein one of the two coolant inlets is in fluid communication with the first coolant jacket and a second of the two coolant inlets is in fluid communication with the second coolant jacket.

The electric machine module may further comprise a first o-ring coupled to at least a portion of the first seal element and a second o-ring coupled to at least a portion of the second seal element.

The electric machine module may further comprise an outlet disposed through at least a portion of the sleeve member, and wherein the outlet is in fluid communication with first coolant jacket and the second coolant jacket.

The electric machine module may further comprise a plurality of coolant apertures disposed through portions of the sleeve member.

A first portion of the plurality of coolant apertures may be disposed through a portion of the sleeve member to fluidly connect the first coolant jacket and the machine cavity and a second portion of the coolant apertures may be disposed through a portion of the sleeve member to fluidly connect the second coolant jacket and the machine cavity.

According to an aspect of the invention there is provided an electric machine module comprising a housing at least partially defining a machine cavity, the housing further including a sleeve member coupled to at least one end cap, the sleeve member comprising a first axial end and a second axial end, a first coolant jacket being disposed substantially within at least a portion of the sleeve member, a second coolant jacket being disposed substantially within at least a portion of the sleeve member and being at least partially axially adjacent to the first coolant jacket, and a central region being disposed within the sleeve member, the central region being positioned between at least a portion of the first coolant jacket and the second coolant jacket, the central region further comprising circumferentially arranged first regions and second regions, and an electric machine positioned substantially within the machine cavity and at least partially enclosed by the housing, the electric machine including a stator assembly, the electric machine positioned within the machine cavity so that at least some portions of the stator assembly are substantially circumscribed by portions of the first coolant jacket and the second coolant jacket.

The first regions and the second regions may alternate around at least a portion of the central region.

At least one of the first regions may comprise a coolant channel to fluidly connect the first coolant jacket and the second coolant jacket.

The electric machine module may further comprise a first seal element coupled to the sleeve member substantially adjacent to the first axial end to substantially seal at least a portion of the first coolant jacket.

The electric machine module may further comprise a second seal element coupled to the sleeve member substantially adjacent to the second axial end to substantially seal at least a portion of the second coolant jacket.

The electric machine module may further comprise a first o-ring coupled to at least a portion of the first seal element and a second o-ring coupled to at least a portion of the second seal element.

The electric machine module may further comprise at least one coolant inlet disposed through a portion of the sleeve member.

A radial width of at least one of the first coolant jacket and the second coolant jacket may become greater as an axial distance from the central region becomes greater.

According to an aspect of the invention there is provided a method of manufacturing an electric machine module, the method comprising forming a sleeve member so that the sleeve member includes at least one coolant jacket, a first axial end, and a second axial end, coupling at least one seal element to the sleeve member substantially adjacent to at least one of the first axial end and the second axial end to substantially seal the at least one coolant jacket, wherein at least a portion of the at least one coolant jacket comprises a greater radial width substantially adjacent to the at least one seal element relative to portions of the at least one coolant jacket that are substantially distal to the at least one seal element, disposing at least one coolant inlet through a portion of the sleeve member so that the at least one coolant inlet is in fluid communication with the at least one coolant jacket, coupling at least one end cap to the sleeve member to substantially form the housing, the housing at least partially defining a machine cavity, and positioning a stator assembly within the machine cavity so that the at least one coolant jacket substantially circumscribes at least a portion of the stator assembly.

Forming the sleeve member may comprise casting the sleeve member from aluminum.

### DESCRIPTION OF THE DRAWINGS

FIG. 1 is an isometric view of an electric machine module according to one embodiment of the invention.
FIG. 2 is a cross-sectional view of a portion of an electric machine module according to one embodiment of the invention.
FIG. 3 is a partial cross-sectional view of a portion of an electric machine module according to one embodiment of the invention
FIG. 4 is partial cross-sectional view of a portion of the electric machine module of FIG. 1.
FIG. 5A is an isometric view of a sleeve member according to one embodiment of the invention.
FIG. 5B is a side view of a portion of a sleeve member according to one embodiment of the invention.
FIG. 6 is an isometric view of a sleeve member according to one embodiment of the invention.
FIG. 7 is a partial cross-sectional view of a portion of a housing according to one embodiment of the invention.
FIG. 8 is an isometric view of a portion of a sleeve member according to one embodiment of the invention.
FIG. 9 is an isometric wire-frame view of a sleeve member according to one embodiment of the invention.
FIG. 10 is a partial cross-sectional view of a portion of a housing according to one embodiment of the invention.
FIG. 11 is a partial cross-sectional view of a portion of a housing according to one embodiment of the invention.
FIG. 12 is an isometric view of a sleeve member according to one embodiment of the invention.
FIG. 13 is an expanded isometric view of the sleeve member of FIG. 12.
FIG. 14 is a cross-sectional view of a portion of the sleeve member of FIG. 12.
FIG. 15 is a portion of an electric machine module according to one embodiment of the invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives that fall within the scope of embodiments of the invention.

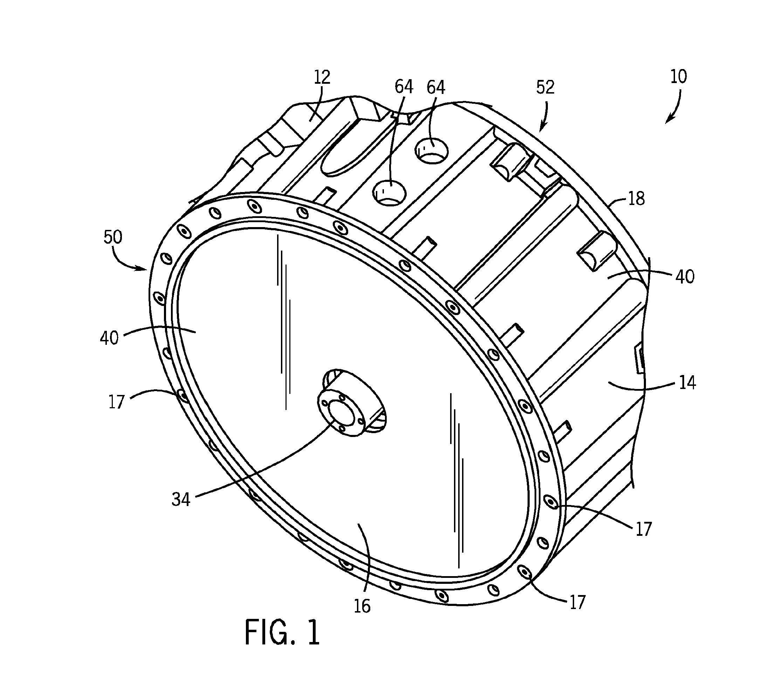

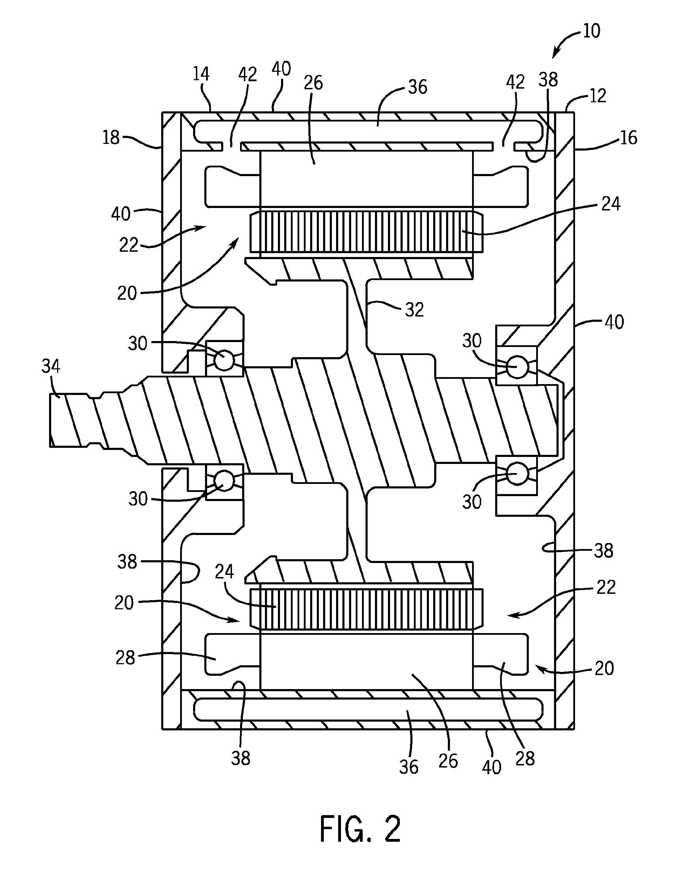

FIGS. 1 and 2 illustrate an electric machine module 10 according to one embodiment of the invention. The module 10 can include a housing 12 comprising a sleeve member 14, a first end cap 16, and a second end cap 18. An electric machine 20 can be housed within a machine cavity 22 at least partially defined by the sleeve member 14 and the end caps 16, 18. For example, the sleeve member 14 and the end caps 16, 18 can be coupled via conventional fasteners 17, or another suitable coupling method, to enclose at least a portion of the electric machine 20 within the machine cavity 22. In some embodiments the housing 12 can comprise a substantially cylindrical canister and a single end cap (not shown). Further, in some embodiments, the module housing 12, including the sleeve member 14 and the end caps 16, 18, can comprise materials that can generally include thermally conductive properties, such as, but not limited to aluminum or other metals and materials capable of generally withstanding operating temperatures of the electric machine. In some embodiments, the housing 12 can be fabricated using different methods including casting, molding, extruding, and other similar manufacturing methods.

The electric machine 20 can include a rotor assembly 24, a stator assembly 26, including stator end turns 28, and bearings 30, and can be disposed about a shaft 34. As shown in FIG. 2, the stator assembly 26 can substantially circumscribe at least a portion of the rotor assembly 24. In some embodiments, the rotor assembly 24 can also include a rotor hub 32 or can have a "hub-less" design (not shown).

In some embodiments, the electric machine 20 can be operatively coupled to the module housing 12. For example, the electric machine 20 can be fit within the housing 12. In some embodiments, the electric machine 20 can be fit within the housing 12 using an interference fit, a shrink fit, other similar friction-based fit that can at least partially operatively couple the machine 20 and the housing 12. For example, in some embodiments, the stator assembly 26 can be shrunk fit into the module housing 12. Further, in some embodiments, the fit can at least partially secure the stator assembly 26, and as a result, the electric machine 20, in both axial and circumferential directions. In some embodiments, during operation of the electric machine 20 the fit between the stator assembly 26 and the module housing 12 can at least partially serve to transfer torque from the stator assembly 26 to the module housing 12. In some embodiments, the fit can result in a generally greater amount of torque retained by the module 10.

The electric machine 20 can be, without limitation, an electric motor, such as a hybrid electric motor, an electric generator, or a vehicle alternator. In one embodiment, the electric machine 20 can be a High Voltage Hairpin (HVH) electric motor or an interior permanent magnet electric motor for hybrid vehicle applications.

Components of the electric machine 20 such as, but not limited to, the rotor assembly 24, the stator assembly 26, and the stator end turns 28 can generate heat during operation of the electric machine 20. These components can be cooled to increase the performance and the lifespan of the electric machine 20.

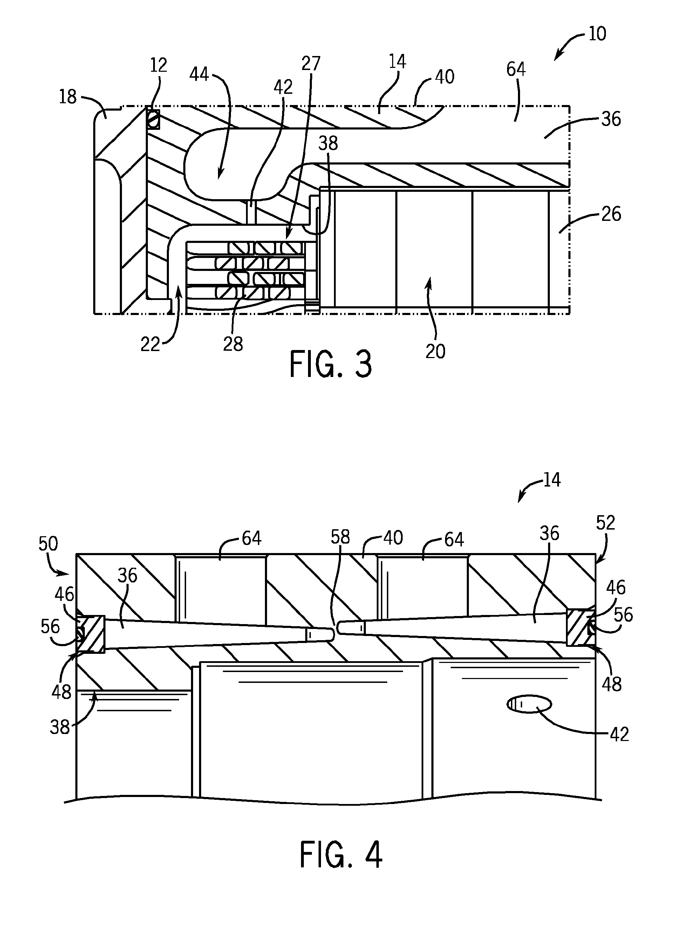

As shown in FIGS. 2 and 3, in some embodiments, the housing 12 can comprise a coolant jacket 36. In some embodiments, the housing 12 can include an inner wall 38 and an outer wall 40 and the coolant jacket 36 can be positioned substantially between at least a portion the walls 38, 40. For example, in some embodiments, the machine cavity 22 can be at least partially defined by the inner wall 38 (e.g., each of the elements of the housing 12 can comprise a portion of the inner wall 38). In some embodiments, the coolant jacket 36 can substantially circumscribe at least a portion of the electric machine 20. For example, in some embodiments, the coolant jacket 36 can substantially circumscribe at least a portion of an outer perimeter of the stator assembly 26, including portions of the stator end turns 28.

Further, in some embodiments, the coolant jacket 36 can contain a coolant that can comprise transmission fluid, ethylene glycol, an ethylene glycol I water mixture, water, oil, motor oil, a gas, a mist, or a similar substance. The coolant jacket 36 can be in fluid communication with a coolant source (not shown) which can pressurize the coolant prior to or as it is being dispersed into the coolant jacket 36, so that the pressurized coolant can circulate through the coolant jacket 36.

Also, in some embodiments, the inner wall 38 can include coolant apertures 42 so that the coolant jacket 36 can be in fluid communication with the machine cavity 22. In some embodiments, the coolant apertures 42 can be positioned substantially adjacent to the stator end turns 28. For example, in some embodiments, as the pressurized coolant circulates through the coolant jacket 36, at least a portion of the coolant can exit the coolant jacket 36 through the coolant apertures 42 and enter the machine cavity 22. Also, in some embodiments, the coolant can contact the stator end turns 28, which can lead to at least partial cooling. After exiting the coolant apertures 42, at least a portion of the coolant can flow through the machine cavity 22 and can contact various module 10 elements, which, in some embodiments, can lead to at least partial cooling of the module 10.

According to some embodiments of the invention, the coolant jacket 36 can include multiple configurations. In some embodiments, at least a portion of the coolant jacket 36 can extend through the sleeve member 14 a distance substantially similar to an axial length of the stator assembly 26. For example, in some embodiments, an axial length of a portion of the coolant jacket 36 can extend at least the same distance as the axial length of the stator assembly 26, including the stator end turns 28. In some embodiments, portions of the coolant jacket 36 can extend greater and lesser axial distances, as desired by manufacturers and/or end users for cooling.

In some embodiments, a portion of the coolant jacket 36 also can comprise at least one radially inward extension 44. For example, as shown in FIG. 3, in some embodiments, a region of the inner wall 38 can be substantially radially recessed so that the radially inward extension 44 of the coolant jacket 36 can be substantially adjacent to at least one of the stator end turns 28. In some embodiments, radially inward extensions 44 can be positioned adjacent to one of, both of, or neither of the stator end turns 28. Further, in some embodiments, the coolant jacket 36 can comprise radially inward extensions 44 substantially continuously around at least a portion of an outer diameter of at least one of the stator end turns 28 (i.e., one continuous radially inward extension around a portion of at least one of the stator end turns 28). In other embodiments, the coolant jacket 36 can comprise substantially discrete radially inward extensions 44 positioned around at least a portion of an outer diameter 27 of at least one set of the stator end turns 28. In some embodiments, the housing 12 can comprise at least two radially inward extensions 44. For example, in some embodiments, the housing 12 can comprise two halves coupled together in a substantially axially central location so that each half of the housing 12 can comprise a radially inward extension 44 and the electric machine 20 can be positioned substantially between the two halves.

In some embodiments, the stator end turns 28 can comprise a generally lesser outer diameter compared to the stator assembly 26, and, as a result, a greater distance can exist between the stator end turns 28 and the cooling jacket 36. In some embodiments, the radially inward extensions 44 of the coolant jacket 36 can enhance module 10 cooling because some of the coolant can circulate relatively closer to the stator end turns 28, compared to embodiments substantially lacking the radially inward extension 44. As a result, in some embodiments, a distance between the coolant and an area rejecting heat energy (i.e., the stator end turns 28) can be generally minimized, which can lead to generally increased heat energy transfer.

In some embodiments, the sleeve member 14 and/or the coolant jacket 36 can comprise other configurations. In some embodiments, the sleeve member 14 can be at least partially formed using a casting process. For example, in some embodiments, the sleeve member 14 can be formed using a die-casting process (e.g., an open-and-close casting process), which can result in an at least partial reduction in sleeve member 14 cost and complexity relative to other forms of sleeve member 14 manufacture. In some embodiments, the sleeve member 14 can be formed (e.g., cast) so that the coolant jacket 36 is positioned substantially similar to other embodiments of the invention. In some embodiments, the sleeve member 14 can be formed so that the coolant jacket 36 can comprise other configurations.

In some embodiments, sleeve member 14 can comprise more than one coolant jacket 36. In some embodiments, the sleeve member 14 can be formed so that more than one coolant jacket 36 can be at least partially positioned within the sleeve member 14. As shown in FIG. 4, in some embodiments, the sleeve member 14 can comprise more than one coolant jacket 36. For example, as shown in FIG. 4, in some embodiments, the sleeve member 14 can comprise two coolant jackets 36. Further, in some embodiments, the coolant jackets 36 can be substantially axially adjacent to each other. Moreover, as described in further detail below, in some embodiments, the coolant jackets 36 can be substantially sealed relative to each other, although, in some embodiments, the coolant jackets 36 can be fluidly connected to each other.

In some embodiments, the sleeve member 14 can be formed so that it includes at least two coolant jackets 36. For example, in some embodiments, the sleeve member 14 can be formed by a die-casting process, as previously mentioned. In some embodiments, at least two cores (not shown) can be used with the die to form at least a portion of the coolant jackets 36 during the manufacturing process of the sleeve member 14. Moreover, in some embodiments, at least a portion of the coolant jackets 36 can be formed substantially after formation of the sleeve member 14. For example, in some embodiments, the sleeve member 14 can be formed (e.g., via casting, molding, etc.) and coolant jackets 36 can be machined into the sleeve member 14 substantially after formation of the sleeve member 14.

Furthermore, in some embodiments, the sleeve member 14 can comprise a single coolant jacket 36 formed in a substantially similar manner (not shown). For example, in some embodiments, an axial length of the sleeve member 14 may be substantially insufficient to enable the formation of two coolant jackets 36. Accordingly, in some embodiments, the sleeve member 14 can comprise a single coolant jacket 36 configured and arranged similarly to other embodiments. Moreover, although future references include references to more than one coolant jacket 36 (e.g., two coolant jackets 36), the references should be construed to include embodiments comprising a single coolant jacket 36. In other embodiments, the number, size, configurations, and other indicia of the coolant jackets 36 can vary according to machine performance requirements, module size constraints, and any other considerations relevant to the manufacturer and/or user.

In some embodiments, the coolant jackets 36 can be oriented so that the coolant jacket 36 width changes. By way of example only, in some embodiments, the more axially outward portions of the coolant jacket 36 can comprise a greater radial width relative to the more axially inward portions of the coolant jacket 36. For example, in some embodiments, after formation of the sleeve member 14 and the coolant jackets 36 (e.g., via casting), in order to remove the cores from the formed sleeve member 14, a greater width at the axially outward portions may be necessary (e.g., creation of a "draft"). As a result, in some embodiments, the width of some portions of the coolant jackets 36 can be greater than the width of other portions of the coolant jackets 36. In some embodiments, at least one of the coolant jackets 36 can comprise a substantially uniform width.

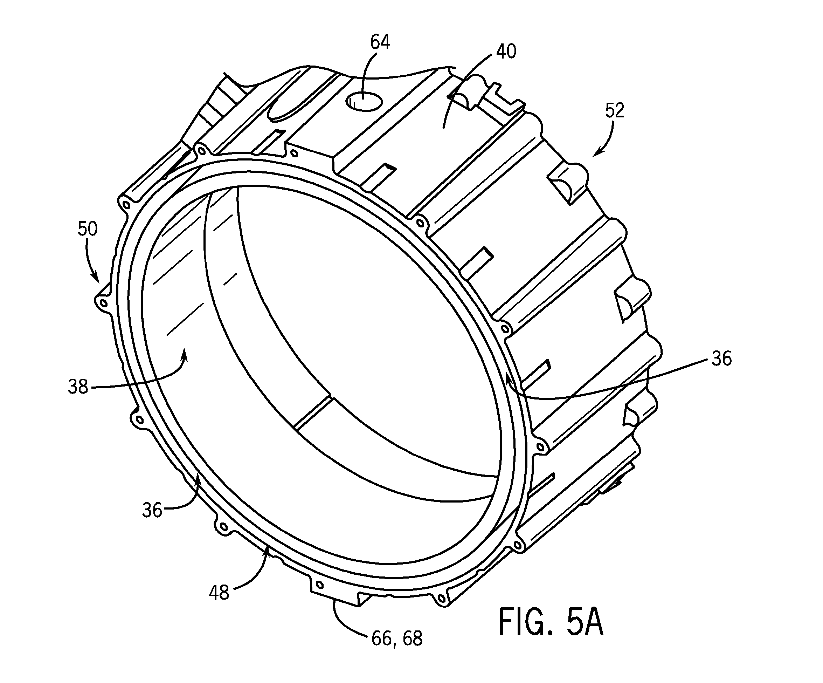

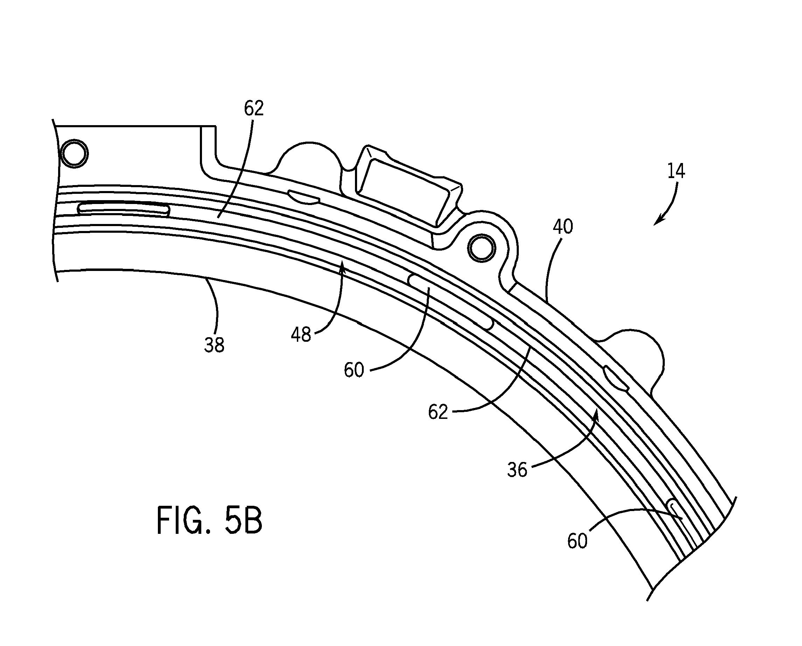

In some embodiments, axial ends of the sleeve member 14 and/or the coolant jackets 36 can be substantially open. For example, as shown in FIGS. 5A and 5B, in some embodiments, the axial sides of the coolant jackets 36 can be substantially unsealed due to the manner in which the jackets 36 can be formed (e.g., use of cores during the casting process). As a result, in some embodiments, at least one seal element 46 can be coupled to the sleeve member 14 to substantially seal at least a portion of the coolant jackets 36 to prevent material amounts of coolant from exiting the coolant jackets 36 at the axial ends.

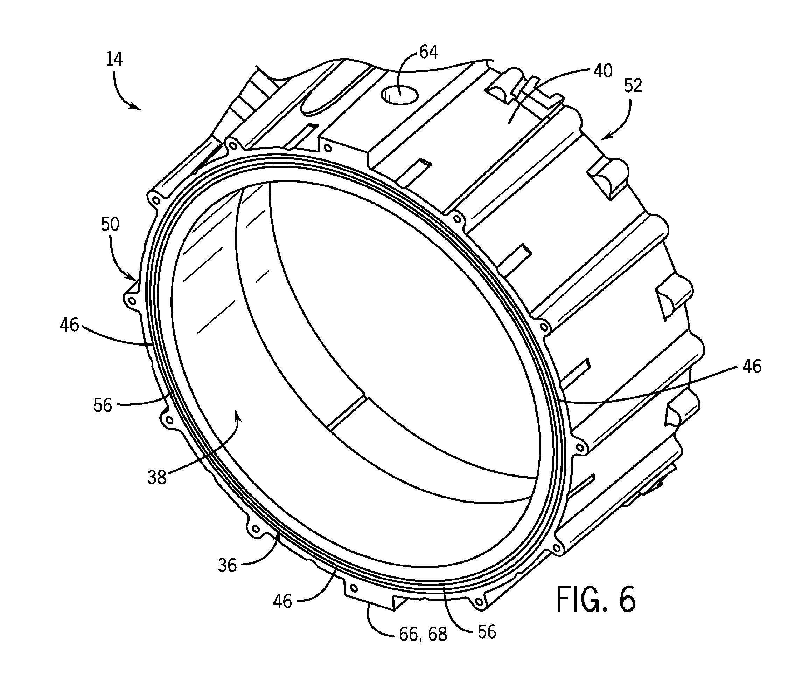

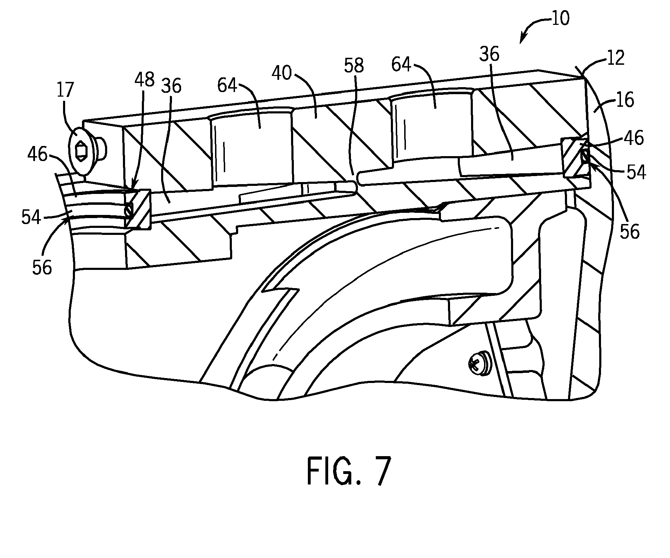

In some embodiments, as shown in FIGS. 6 and 7, the axial ends of the coolant jackets 36 can be substantially sealed with seal elements 46. As shown in FIGS. 4 and 6-8, in some embodiments, the seal elements 46 can be configured and arranged to fit within a portion of the sleeve member 14 to substantially seal the coolant jackets 36. For example, in some embodiments, the sleeve member 14 can comprise a recess 48 immediately adjacent to the coolant jackets 36 and positioned substantially between the coolant jackets 36 and the environment surrounding the sleeve member 14. Moreover, in some embodiments, both axial sides of the sleeve member 14 can comprise recesses 48 that can be dimensioned to receive at least one seal element 46 to substantially seal the coolant jackets 36.

In some embodiments, the seal elements 46 can be substantially annular in shape. Although, in other embodiments, the seal elements 46 can comprise any other shape to correspond with the sleeve member 14 and/or the recesses 48. Moreover, in some embodiments, at least one of the seal elements 46 can be one unit, however, in other embodiments, at least one of the seal elements 46 can comprise a plurality of subunits coupled together to form the seal element 46.

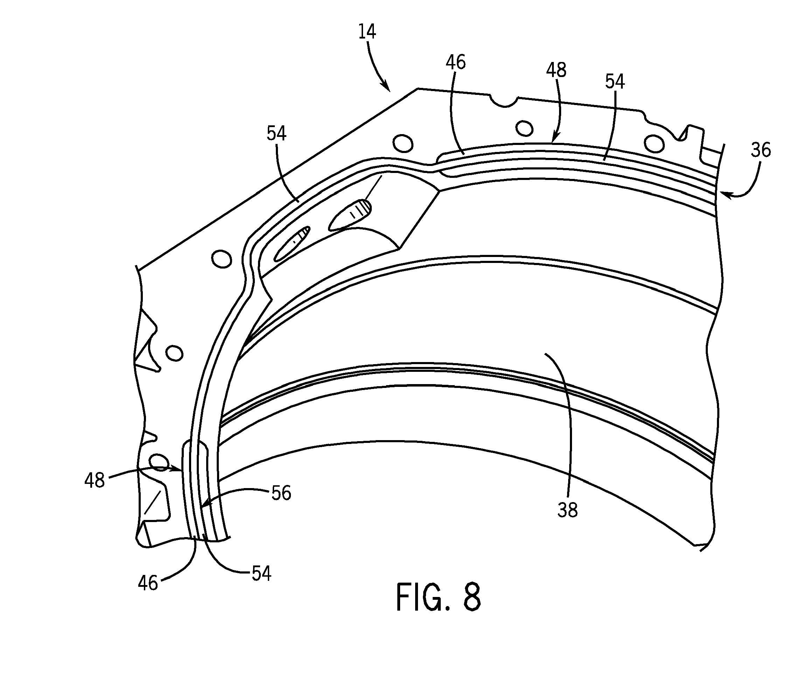

Furthermore, in some embodiments, as shown in FIGS. 6 and 8, the seal elements 46 can comprise a substantially similar circumferential length relative to the coolant jackets 36. For example, as shown in FIG. 6, at least one of the seal elements 46 can comprise a substantially similar circumferential length as the sleeve member 14 (e.g., the seal element 46 extends around an entire circumference of an axial end of the sleeve member 14). In some embodiments, as shown in FIG. 8, at least one of the seal elements 46 can extend a lesser circumferential distance relative to the sleeve member 14 and can comprise a generally "u"-shaped configuration (i.e., not annular). In some embodiments, a first axial side 50 of sleeve member 14 can comprise a seal element 46 extending around the circumference of the first axial side 50 of the sleeve member 14 and a second axial side 52 of the sleeve member 14 can comprise a seal element 46 extending a lesser circumferential length of the second axial side 52 of the sleeve member 14.

In some embodiments, the seal element 46 can comprise different configurations. In some embodiments, as shown in FIGS. 4 and 6-8, the seal element 46 can comprise a substantially metallic and/or polymeric material that can be fit within the recesses 48. For example, in some embodiments, at least one of the seal elements 46 can be interference fit, friction fit, or otherwise coupled to and/or within the sleeve member 14. By way of example only, in some embodiments, the seal element 46 can comprise a metallic composition (e.g., aluminum) that can be interference fit within the recess 48 to substantially seal at least one of the coolant jackets 36. In some embodiments, the seal element 46 can comprise a welded structure (e.g., the recesses 48 are welded so that the coolant jacket 36 is substantially sealed), an o-ring and gasket configuration, or any other structure capable of sealing at least a portion of the coolant jackets 36. Moreover, in some embodiments, the seal elements 46 on the first and second axial sides 50, 52 of the sleeve member 14 can comprise different seal element 46 configurations in any combination of any of the previously mentioned seal elements 46.

In some embodiments, at least one of the seal elements 46 can be configured and arranged to receive an o-ring 54. For example, as shown in FIGS. 7 and 8, in some embodiments, at least a portion of at least one of the seal elements 46 can comprise a seal recess 56 that can be configured an arranged to receive at least a portion of the o-ring 54. In some embodiments, the seal elements 46 can comprise a seal recess 56 so that each axial side 50, 52 of the sleeve member 14 can comprise an o-ring 54. Furthermore, as shown in FIG. 8, in some embodiments, at least a portion of the sleeve member 14 can comprise a seal recess 56 so that the o-ring 54 can extend the entire circumference of the sleeve member 14 if the seal element 46 does not extend the circumference of the axial end 50, 52 of the sleeve member 14. Moreover, in some embodiments, after disposing the o-rings 54 within at least a portion of the seal recesses 56, the end caps 16, 18 can be coupled to the sleeve member 14, as previously mentioned, to form at least a portion of the housing 12, as shown in FIG. 7. In some embodiments, the o-rings 54 can at least partially function to seal the machine cavity 22.

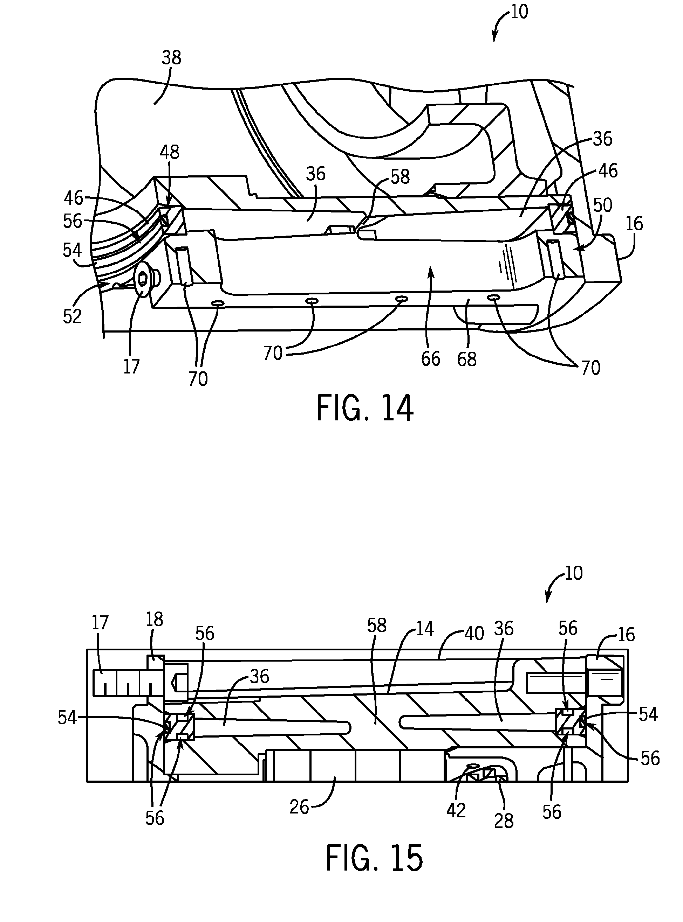

Furthermore, in some embodiments, at least a portion of at least one of the seal elements 46 can be configured and arranged to receive multiple o-rings 54. As shown in FIG. 15, in some embodiments, at least a portion of the seal elements 46 can comprise more than one seal recess 56. For example, as shown in FIG. 15, in some embodiments, at least one of the seal elements 46 can comprise three seal recess 56. In some embodiments, a radially inward and a radially outward face of at least a portion of one of the seal elements 46 can comprise one or more seal recesses 56 that are configured and arranged to receive at least one o-ring 54 or other coupling materials (e.g. brazing material, solder, welding materials, adhesives, etc.). For example, in some embodiments, the o-rings 54 can be at least partially positioned within one or more of the seal recesses 56 so that when seal elements 46 are positioned at least partially within the recesses 48, the coolant jackets 36 can be substantially sealed.

As shown in FIGS. 4, 8, and 10, in some embodiments, the coolant jackets 36 can be substantially sealed with respect to each other. In some embodiments, the sleeve member 14 can comprise a central region 58 that can substantially seal at least a portion of the coolant jackets 36 with respect to each other. For example, in some embodiments, as shown in FIGS. 4, 7, and 9, the central region 58 can be disposed in a substantially axially central location with respect to the sleeve member 14 (e.g., positioned substantially between the two coolant jackets 36). In some embodiments, the central region 58 can be positioned substantially between the inner wall 38 and the outer wall 40 of the housing 12 (e.g., to connect the inner wall 38 and the outer wall 40). Moreover, in some embodiments, the central region 58 can extend the circumference of the sleeve member 14, although in other embodiments, the central region 58 can extend around portions of the circumference of the sleeve member 14.

In some embodiments, the central region 58 can comprise multiple configurations. In some embodiments, the central region 58 can comprise a substantially constant size. For example, in some embodiments, the central region 58 can comprise a generally constantly dimensioned polygonal structure (e.g., a rectangular structure) between the coolant jackets 36. As a result, in some embodiments, the central region 58 can substantially function as a barrier between the two coolant jackets 36 so that coolant does not intercirculate between the coolant jackets 36. For example, in some embodiments, the central region 58 can be formed from a space defined between the cores during the sleeve member 14 manufacturing process so that the coolant jackets 36 are substantially sealed with respect to each other (e.g., coolant is substantially prevented from intercirculating between the jackets 36). In some embodiments, the central region 58 can comprise at least one channel that is at least partially axially disposed through the central region 58 to fluidly connect the coolant jackets 36, as described in further detail below.

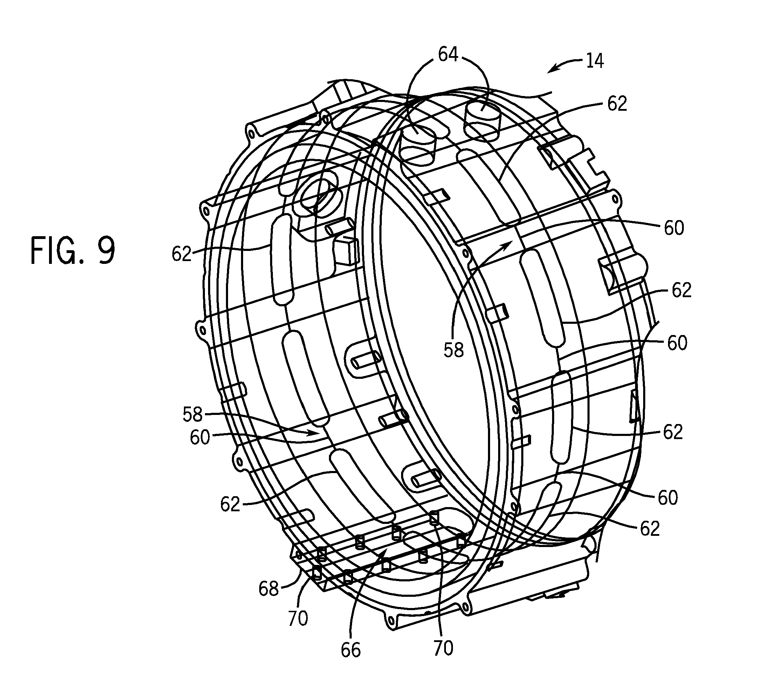

In some embodiments, the central region 58 can comprise other configurations. As shown in FIG. 9, in some embodiments, the central region 58 can comprise at least a first region 60 and a second region 62. In some embodiments, the central region 58 can comprise multiple first regions 60 and multiple second regions 62. In some embodiments, the central region 58 can comprise multiple first and second regions 60, 62 configured and arranged in a substantially alternating circumferential pattern. For example, as shown in FIG. 9, in some embodiments, around at least a portion of an inner circumference (e.g., substantially between the coolant jackets 36), the central region 58 can be configured so that the first regions 60 and the second regions 62 alternate around at least a portion of the inner circumference.

In some embodiments, at least a portion of the first regions 60 can comprise a different configuration relative to at least a portion of the second regions 62. In some embodiments, at least some of the first regions 60 can comprise a lesser axial width and circumferential length relative to at least some of the second regions 62. For example, as shown in FIG. 9, in some embodiments, the first regions 60 can comprise a lesser axial thickness relative to the second regions 62. As a result, in some embodiments, the second regions 62 can at least partially provide structural support for the sleeve member 14 because of the greater axial thickness. In some embodiments, the first regions 60 can also provide structural support for the sleeve member 14.

Moreover, in some embodiments, the lesser axial thickness of the first regions 60 can at least partially enable further modification to the sleeve member 14. For example, in some embodiments, at least one coolant channel can be at least partially axially disposed through a portion of the first regions 60 to enable fluid communication between the coolant jackets 36. In some embodiments, each of the first regions 60 can comprise at least one coolant channel axially disposed to enable fluid communication between the coolant jackets 36. Moreover, in some embodiments, the second regions 62 can comprise at least one coolant channel substantially axially disposed therethrough (e.g., in combination with or in lieu of at least one coolant channel disposed through at least a portion of the first regions 60).

In some embodiments, the generally alternating configuration of the first and second regions 60, 62 can at least partially enhance thermal transfer. In some embodiments, as previously mentioned, at least a portion of a coolant can circulate through the coolant jackets 36. In some embodiments, as coolant circulates through the coolant jackets 36, the configuration and arrangement of the first and second regions 60, 62 (e.g., alternating axial thicknesses) can create coolant flow turbulence from the inconsistent (e.g., jagged and/or ridged) surface of the central region 58. As a result, in some embodiments, the turbulent coolant flow can at least partially enhance thermal energy transfer, which can lead to improved module 10 cooling.

In some embodiments, the module 10 and/or the sleeve member 14 can comprise one or more coolant inlets 64. In some embodiments, at least one coolant inlet 64 can be formed substantially integral with the sleeve member 14. For example, in some embodiments, the sleeve member 14 can be formed (e.g., cast, molded, etc.) so that the at least one coolant inlet 64 radially extends through the outer wall 40 to fluidly connect at least one of the coolant jackets 36 with the fluid source. In some embodiments, the at least one coolant inlet 64 can be positioned through at least a portion of the sleeve member 14 after sleeve member 14 manufacture. For example, in some embodiments, after manufacture of the sleeve member 14, at least one coolant inlet 64 can be disposed through (e.g., machined) the outer wall 40 of the sleeve member 14 to fluidly connect at least one of the coolant jackets 36 with the fluid source.

In some embodiments, the sleeve member 14 can comprise two coolant inlets 64. In some embodiments, the coolant inlets 64 can be configured and arranged to supply coolant to each of the coolant jackets 36. For example, as shown in FIGS. 1, 4, and 7, in some embodiments, each of the coolant jackets 36 can be at least partially sealed with respect to each other until reaching an outlet 66, which will be described in further detail below. Furthermore, in some embodiments, after entering the coolant jackets 36, in some embodiments, portions of the coolant can flow in multiple circumferential directions (e.g., clockwise and counter- clockwise) through at least a portion of the coolant jackets 36. For example, in some embodiments, coolant can enter one of the coolant jackets 36 via one of the coolant inlets 64 and can flow in both a clockwise and counter-clockwise direction and flow toward a generally bottom region of the sleeve member 14. Moreover, in some embodiments, coolant can enter both coolant jackets 36 via each of the coolant inlets 64 and can flow in both a clockwise and counter-clockwise direction and flow toward a generally bottom region of the sleeve member 14 through the coolant jackets 36.

In some embodiments, some elements of the sleeve member 14 can be configured and arranged to create multiple coolant flow paths. For example, in some embodiments, at least one coolant channel can be disposed through the central region 58 so that coolant can enter at least one of the coolant jackets 36 via one of the coolant inlets 64 and can then flow through the coolant channel in the central region 58 to enter another coolant jacket 36. As a result, at least a portion of the coolant can circulate through more than one of the coolant jackets 36 before exiting the sleeve member 14. Moreover, in some embodiments, the central region 58 can comprise multiple coolant channels and coolant can enter both coolant jackets 36 via the coolant inlets 64 and at least a portion of the coolant can circulate in both circumferential directions and axial directions to further increase coolant dispersal throughout the sleeve member 14 and the coolant jackets 36.

Additionally, in some embodiments, coolant outlets (not shown) can be disposed through a portion of the sleeve member substantially adjacent to the coolant inlets 64 and the coolant jackets 36 can be configured and arranged so that coolant flows in only one direction (e.g., the sleeve member 14 comprises a structure configured and arranged to direct coolant in one circumferential direction). As a result, in some embodiments, coolant can enter the coolant jackets 36 via the inlets 64 and can flow substantially in one circumferential direction and exit the coolant jackets 36 via the outlets. Moreover, in some embodiments, the circumferential directions of the coolant jackets 36 can differ. For example, in some embodiments, one of the coolant jackets 36 can be configured and arranged to guide at least a portion of the coolant in a first circumferential direction (e.g., clockwise) and another of the coolant jackets 36 can be configured and arranged to guide at least a portion of the coolant in a second circumferential direction (e.g., counter-clockwise). Furthermore, the sleeve member 14 can be configured and arranged so that other coolant circulation patterns can be employed to achieve desired coolant distributions and flow paths.

In some embodiments, the sleeve member 14 can comprise a single coolant inlet 64. For example, as shown in FIGS. 5, 6, 10, and 11, in some embodiments, the coolant inlet 64 can fluidly connect the coolant source and both coolant jackets 36. Moreover, in some embodiments, the coolant inlet 64 can be substantially centrally located along an axial length of the sleeve member 14. In some embodiments, coolant can enter both coolant jackets 36 via the coolant inlet 64 and can flow through both coolant jackets 36 substantially simultaneously.

In some embodiments, the coolant flow path can comprise alternative configurations. For example, in some embodiments, the coolant inlet 64 can fluidly connect one of the coolant jackets 36 with the fluid source and at least one coolant channel can be disposed through a portion of the central region 58. As a result, in some embodiments, coolant can enter a first coolant jacket 36 via the coolant inlet 64 and can then enter the second coolant jacket 36 via the coolant channel disposed through a portion of the central region 58. As a result, at least a portion of the coolant can circulate from one coolant jacket 36 to the other coolant jacket 36, which can result in module 10 cooling. In some embodiments, the coolant flow path can comprise other alternative configurations similar to or different from some of the previously mentioned embodiments.

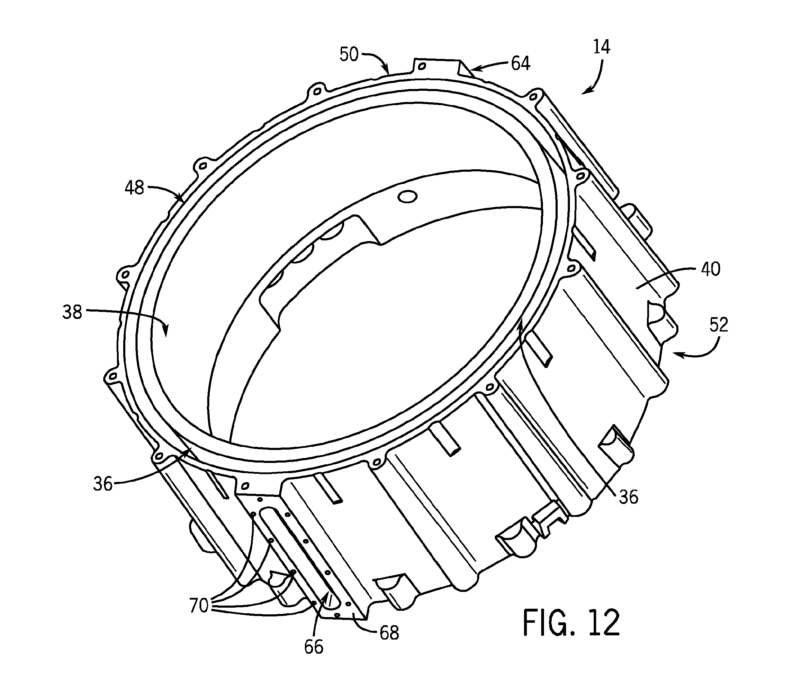

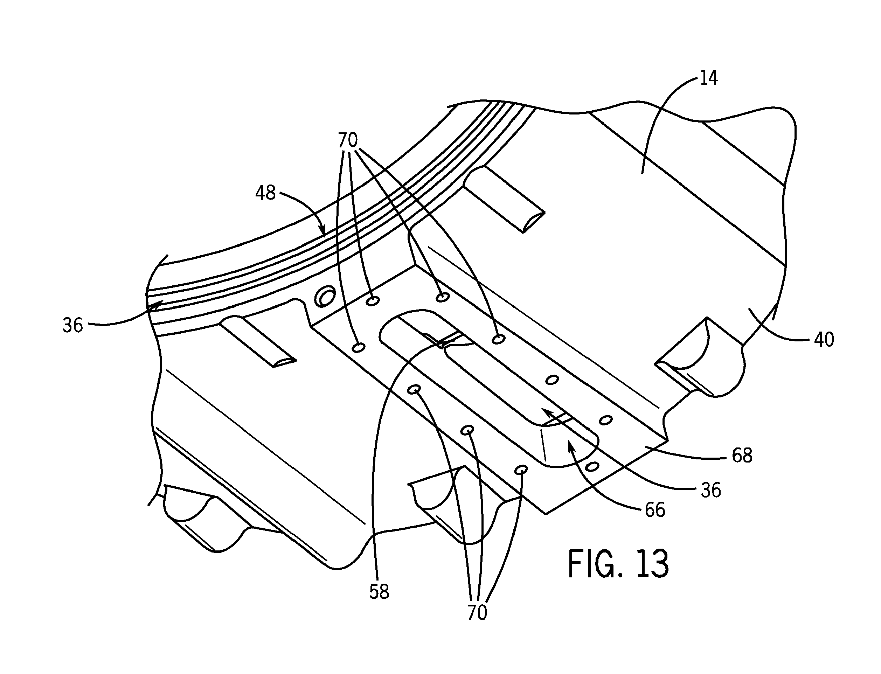

In some embodiments, as previously mentioned, the sleeve member 14 can comprise at least one outlet 66. As shown in FIGS. 12-14, in some embodiments, the outlet 66 can be at least partially disposed through a portion of the outer wall 40. Moreover, in some embodiments, the outlet 66 can fluidly connect at least one of the coolant jackets 36 with a heat-exchange element (not shown). For example, as shown in FIGS. 12-14, in some embodiments, the outlet 66 can be in fluid communication with both of the coolant jackets 36 so that after at least a portion of the coolant has circulated through at least a portion of the coolant jackets 36, it can exit the coolant jackets 36 at the outlet 66. Moreover, in some embodiments, the sleeve member 14 can comprise multiple outlets (not shown) so that each coolant jacket 36 is in fluid communication with a different outlet.

In some embodiments, the sleeve member 14 can comprise an outlet region 68 through which at least a portion of the outlet 66 can be disposed. For example, as shown in FIGS. 12-14, in some embodiments, the outlet region 68 can comprise a greater radial thickness relative to other portions of the sleeve member 14. Moreover, in some embodiments, the greater radial thickness can serve multiple functions. For example, in some embodiments, the greater thickness can at least partially provide enhanced structural strength in an area of sleeve member 14 immediately adjacent to the outlet 66 (e.g., in an area that may be structurally weaker because of the inclusion of the outlet 66). Further, in some embodiments, the outlet region 68 can be configured and arranged to receive other elements. For example, in some embodiments, a sump, a sump-like structure, a heat-exchange element, a drain system, or other structures (not shown) can be coupled to the outlet region 68. As shown in FIGS. 12-14, in some embodiments, the outlet region 68 can comprise a plurality of coupling apertures 70 configured and arranged to receive at least a portion of these other structures. For example, in some embodiments, some of the previously mentioned structures can be coupled to the outlet region 68 using at least a portion of the coupling apertures 70 (e.g., via conventional fasteners). Moreover, in some embodiments, at least a portion of the previously mentioned structures can be coupled to the outlet region 68 via other coupling methods (e.g., welding, brazing, adhesives, etc.).

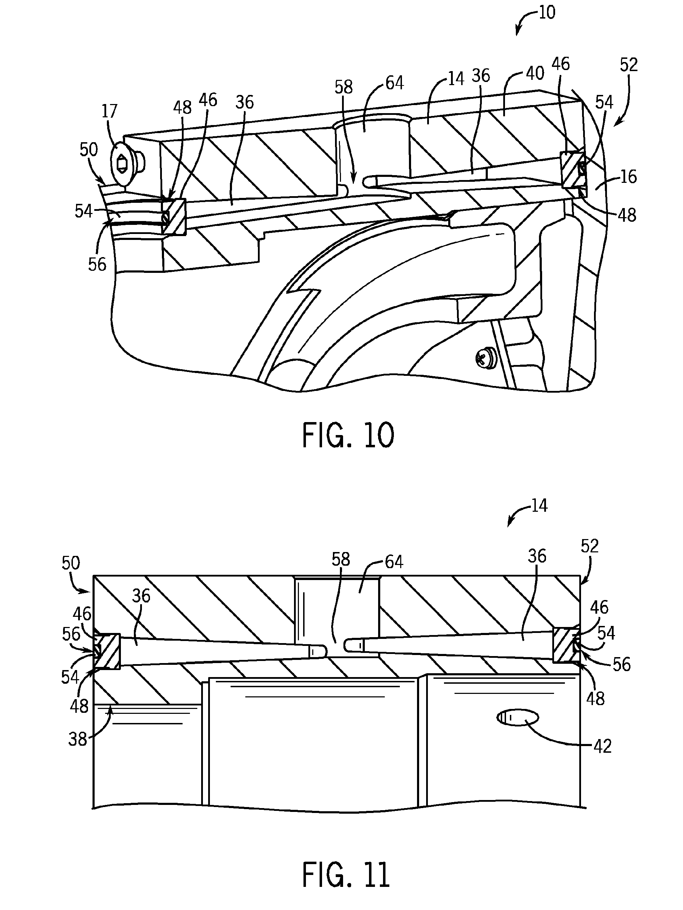

In some embodiments, at least one of the coolant jackets 36 can fluidly connect to the machine cavity 22 via the coolant apertures 42. For example, as shown in FIGS. 4 and 11, in some embodiments, one of or both of the coolant jackets 36 can fluidly connect to the machine cavity 22 via coolant apertures 42 disposed through portions of the inner wall 38. In some embodiments, similar to some previously mentioned embodiments, at least a portion of the coolant apertures 42 can be positioned substantially adjacent to at least a portion of the stator end turns 28. In some embodiments, at least a portion of coolant can exit the machine cavity 22 via drain apertures (not shown) disposed through a portion of the inner wall 38 that fluidly connect with the outlet 66. As at least a portion of the coolant flows through the machine cavity 22, the coolant can contact some elements of the module 10 and receive at least a portion of the heat energy produced by the elements, which can lead to module 10 cooling. Moreover, the coolant can transport at least a portion of the heat energy out of the module 10 via the outlet 66.

In some embodiments, after exiting the module 10 via at least one outlet 66, at least a portion of the coolant can circulate to the heat-exchange element. In some embodiments, at least a portion of the heat energy received by the coolant as it circulates through the coolant jacket 36 and through the machine cavity 22 can be transferred at the heat-exchange element. Moreover, in some embodiments, at least a portion of the coolant can be recycled through at least one of the coolant jackets 36 for further cooling.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

## Claims

1. An electric machine module comprising:
a housing at least partially defining a machine cavity, the housing further including a sleeve member coupled to at least one end cap, the sleeve member comprising
a first axial end and a second axial end,
a first coolant jacket being disposed substantially within at least a portion of the sleeve member,
a first seal element coupled to the sleeve member substantially adjacent to the first axial end to substantially seal at least a portion of the first coolant jacket,
a second coolant jacket being disposed substantially within at least a portion of the sleeve member and being at least partially axially adjacent to the first coolant jacket, and
a second seal element coupled to the sleeve member substantially adjacent to the second axial end to substantially seal at least a portion of the second coolant jacket; and
an electric machine being positioned substantially within the machine cavity and being at least partially enclosed by the housing, the electric machine including a stator assembly, the electric machine positioned within the machine cavity so that at least some portions of the stator assembly are substantially circumscribed by portions of the first coolant jacket and the second coolant jacket.

2. The electric machine module of claim 1 and further comprising a central region disposed substantially between at least a portion of the first coolant jacket and a portion of the second coolant jacket.

3. The electric machine module of claim 2, wherein the central region comprises at least one first region and at least one second region.

4. The electric machine module of claim 1, wherein the first coolant jacket is fluidly connected to the second coolant jacket.

5. The electric machine module of claim 1, and further comprising a coolant inlet disposed through a portion of the sleeve member, and wherein the coolant inlet is in fluid communication with the first coolant jacket and the second coolant jacket.

6. The electric machine module of claim 1, and further comprising two coolant inlets disposed through portions of the sleeve member, wherein one of the two coolant inlets is in fluid communication with the first coolant jacket and a second of the two coolant inlets is in fluid communication with the second coolant jacket.

7. The electric machine module of claim 1 and further comprising a first o-ring coupled to at least a portion of the first seal element and a second o-ring coupled to at least a portion of the second seal element.

8. The electric machine module of claim 1 and further comprising an outlet disposed through at least a portion of the sleeve member, and wherein the outlet is in fluid communication with first coolant jacket and the second coolant jacket.

9. The electric machine module of claim 1 and further comprising a plurality of coolant apertures disposed through portions of the sleeve member; wherein optionally
a first portion of the plurality of coolant apertures are disposed through a portion of the sleeve member to fluidly connect the first coolant jacket and the machine cavity and a second portion of the coolant apertures are disposed through a portion of the sleeve member to fluidly connect the second coolant jacket and the machine cavity.

10. An electric machine module comprising:
a housing at least partially defining a machine cavity, the housing further including a sleeve member coupled to at least one end cap, the sleeve member comprising
a first axial end and a second axial end,
a first coolant jacket being disposed substantially within at least a portion of the sleeve member,
a second coolant jacket being disposed substantially within at least a portion of the sleeve member and being at least partially axially adjacent to the first coolant jacket, and
a central region being disposed within the sleeve member, the central region being positioned between at least a portion of the first coolant jacket and the second coolant jacket, the central region further comprising circumferentially arranged first regions and second regions; and
an electric machine positioned substantially within the machine cavity and at least partially enclosed by the housing, the electric machine including a stator assembly, the electric machine positioned within the machine cavity so that at least some portions of the stator assembly are substantially circumscribed by portions of the first coolant jacket and the second coolant jacket.

11. The electric machine module of claim 10, wherein the first regions and the second regions alternate around at least a portion of the central region;
wherein optionally at least one of the first regions comprises a coolant channel to fluidly connect the first coolant jacket and the second coolant jacket.

12. The electric machine module of claim 10 and further comprising a first seal element coupled to the sleeve member substantially adjacent to the first axial end to substantially seal at least a portion of the first coolant jacket;
wherein optionally the electric machine module further comprises a second seal element coupled to the sleeve member substantially adjacent to the second axial end to substantially seal at least a portion of the second coolant jacket;
wherein optionally the electric machine module further comprises a first o-ring coupled to at least a portion of the first seal element and a second o-ring coupled to at least a portion of the second seal element.

13. The electric machine module of claim 10 and further comprising at least one coolant inlet disposed through a portion of the sleeve member;
or wherein a radial width of at least one of the first coolant jacket and the second coolant jacket becomes greater as an axial distance from the central region becomes greater.

14. A method of manufacturing an electric machine module, the method comprising:
forming a sleeve member so that the sleeve member includes at least one coolant jacket, a first axial end, and a second axial end;
coupling at least one seal element to the sleeve member substantially adjacent to at least one of the first axial end and the second axial end to substantially seal the at least one coolant jacket, wherein at least a portion of the at least one coolant jacket comprises a greater radial width substantially adjacent to the at least one seal element relative to portions of the at least one coolant jacket that are substantially distal to the at least one seal element;
disposing at least one coolant inlet through a portion of the sleeve member so that the at least one coolant inlet is in fluid communication with the at least one coolant jacket;
coupling at least one end cap to the sleeve member to substantially form the housing, the housing at least partially defining a machine cavity; and
positioning a stator assembly within the machine cavity so that the at least one coolant jacket substantially circumscribes at least a portion of the stator assembly.

15. The method of claim 14, wherein forming the sleeve member comprises casting the sleeve member from aluminum.
